(19) Europäisches Patentamt
European Patent Office
Office européen des brevets

(11) **EP 3 117 967 A1**

(12) **EUROPEAN PATENT APPLICATION**

(43) Date of publication:
**18.01.2017 Bulletin 2017/03**

(51) Int Cl.:
**B25J 9/16** $^{(2006.01)}$     **B25J 9/00** $^{(2006.01)}$

(21) Application number: **15176833.0**

(22) Date of filing: **15.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ETH Zurich**
**8092 Zurich (CH)**

(72) Inventors:
- **BUCHLI, Jonas**
  **8032 Zürich (CH)**
- **BOAVENTURA CUNHA, Thiago**
  **8600 Dübendorf (CH)**
- **FARSHIDIAN, Farbod**
  **8006 Zürich (CH)**
- **NEUNERT, Michael**
  **8052 Zürich (CH)**

(54) **TRANSPARENCY CONTROL METHOD FOR ROBOTIC DEVICES AND A CONTROL DEVICE THEREFOR**

(57) The transparency control method (100) for robotic devices where a master dynamics (91) controls a slave dynamics (81) to minimize interaction forces and/or lag, comprising feedback controllers (202, 203) and a feedforward controller (204) connected with the slave dynamics (81). The master (91) is configured to provide a master acceleration value (92) as input for the feedforward controller (204) and also to the feedback controller (203), and the slave (81) is configured to provide a slave acceleration value (82) as input for the feedback controller (203), wherein the two acceleration values are subtracted one from the other. The outputs of the slave dynamics (81) as well as of the master dynamics (91) are also connected with a state estimator module (201) providing an estimated interaction force value (51) as input for a force feedback controller (202).

Fig. 5

EP 3 117 967 A1

**Description**

TECHNICAL FIELD

The present invention relates to a transparency control method for robotic devices and a control device therefor, especially for wearable robots, telerobotics, as well as virtual avatars.

PRIOR ART

Wearable robotics, which includes devices such as exoskeletons and limb-prostheses are provided to improve human quality of life. These wearable robots are closely attached to human body in a symbiotic way, moving and working in tandem with the human. They can be employed in a wide range of applications such as physical assistance, rehabilitation, and power augmentation.

Especially, exoskeletons for healthy users are aimed to applications, where the robot should not apply corrective forces to the user nor impose a gait pattern but only follow the user motions in a natural way. The robot should only follow the human motions, being as imperceptible (i.e. transparent) as possible to the user. To render an exoskeleton imperceptible to the wearer is a very challenging control task. The constant and intrinsic interaction between robot and human, as well as person-dependent behaviours and locomotion styles are the main issues when designing such cooperative control.

The same need is felt relating to telerobotics, when the user is steering a robotic device from a remote point. Finally, the concept of transparency control is also applicable to virtual robotic devices, e.g. avatars, where the control of physical actuators is replaced through control of 3D models in a virtual space.

Currently, the state-of-the-art in transparency control relies on impedance controllers, interaction force feedback, and/or electromyography (EMG). At U.C. Berkeley, for instance, based on the definition of 3 different dynamics models of the exoskeleton for distinct gait phases, and a human muscle model, BLEEX uses a low-impedance (i.e. high-sensitivity) feedback controller to minimize interaction forces and make the exoskeleton compliant to the user maneuvers according to H. H. Kazerooni and R. Steger, "The Berkeley lower extremity exoskeleton," in ASME Journal of Dynamic Systems, Measurement and Control, vol. 128, pp. 14-25, 2006.

H. Kawamoto and Y. Sankai disclose in "Power assist method based on phase sequence and muscle force condition for HAL," Advanced Robotics, vol. 19, no. 7, pp. 717-734, 2005A a different control approach in the exoskeleton HAL, which uses EMGs to detect the user intentions and then assist the user in tasks such as walking and load carrying. However, EMG sensors have to be calibrated to each individual user, and very often recalibration is also needed in daily basis. Thus the use of this technology is, for now, very time consuming and often impractical.

A possible alternative to improve transparency controller is by using bio and neuromechanical models that are able to qualitatively describe human motions e.g. walking as by R. Blickhan in "The spring-mass model for running and hopping," Journal of Biomechanics, vol. 22, no. 11-12, pp. 1217-1227, 1989 to try to predict the user behaviour and joint trajectories. Given the model is accurate, the exoskeleton could follow the expected human motions and possibly increase its imperceptibility. However, state-of-the-art human-like models are not able to completely and accurately describe a wide range of human tasks and they often create only conservative results.

The transparency problem with wearable robots has so far being addressed in essentially three different ways:

Aguirre-Ollinger, G., Colgate, J. E., Peshkin, M. A., and Goswami, A use in "Inertia Compensation Control of a One-Degree-of-Freedom Exoskeleton for Lower-Limb Assistance: Initial Experiments", IEEE Transactions on Neural Systems and Rehabilitation Engineering, 2012, vol.20, no.1, p. 68-7. Admittance control with positive acceleration feedback. An admittance controller was used to mask the dynamics of a 1-DOF articulated leg from the user. In addition to the admittance controller, a positive feedback of the exoskeleton joint acceleration is used to compensate inertia. The inertia is slightly over compensated, and the system is unstable in isolation. The connection with the human provides the stabilizing dynamics.

Kazerooni, H., Racine, J. L., Huang, L., and Steger, R. use in "On the control of the Berkeley Lower Extremity Exoskeleton (BLEEX)", IEEE International Conference in Robotics and Automation, 2005 low-impedance controller and model-based inertia compensation: This approach is further disclosed in Huang, L., Steger, J. R., and Kazerooni, H., "Hybrid Control of the Berkeley Lower Extremity Exoskeleton (BLEEX)", ASME International Mechanical Engineering Congress and Exposition, 2005. A low impedance controller (named in the paper "high-sensitivity controller") is used together with a model-based inverse dynamics feedforward term that compensates for the robot inertia and gravity. Several rigid body models of the exoskeleton are used for calculating this feedforward term, depending on the gait phase.

In a third approach Zanotto, D., Lenzi, T., Stegall, P., and Agrawal, S. K. use in "Improving Transparency of Powered Exoskeletons Using Force/Torque Sensors on the Supporting Cuffs", IEEE International Conference on Rehabilitation Robotics, 2013. Interaction force feedback and model-based gravity compensation: A force sensor is positioned between the robot and human at the attachment point to close a feedback look with null desired interaction force. In addition to the feedback control term, they also use a model-based feedforward term to compensate for the weight of the exoskeleton. A friction compensation term is also used.

SUMMARY OF THE INVENTION

Especially, exoskeletons for healthy users are aimed to applications, where the robot should not apply corrective forces to the user nor impose a gait pattern but only follow the user motions in a natural way. Such applications are suitable for healthy users that are prone to loose balance in daily activities, such as elderly people. In such a scenario, the robot should give assistance to the user only when a potential balance loss is detected, avoiding a likely fall and injury. Otherwise, during ordinary situations the robot should only follow the human motions, being as imperceptible (i.e. transparent) as possible to the user.

Based on the prior it is an object of the invention to improve the control approach to provide an improved mostly transparent behaviour to an exoskeleton.

The invention is based inter alia on the understanding that the human limbs acceleration can be used to anticipate, based on the exoskeleton rigid body model, the required robot joint torques and robot trajectories needed to follow the human motions and, therefore, minimize the lag between human and robot motion and thus the human-robot interaction forces. Although the focus of the present invention is on wearable robots, this control approach can well be used in different applications in which it is desirable to reproduce a human motion with minimum lag, such as haptics and virtual reality. It aims at enhancing the ability of such devices to be imperceptible (i.e. transparent) to a user. Imperceptibility is connected with absence or at least reduction of lag and absence or strong reduction of interaction forces.

Within the framework of the present invention, a human-model free method to improve the exoskeleton transparency is disclosed. Through inertial measurement units (IMU's) attached to the human limbs or end-effector, it is possible to mimic the human motions by feeding back the human accelerations into the robot real-time controller. To track the desired human accelerations, a floating base rigid body inverse dynamics feedforward controller is used, which depends only on the robot model. This model-based control approach has been successfully employed in several robotics platforms as described by T. Boaventura, C. Semini, J. Buchli, M. Frigerio, M. Focchi, and D. G. Caldwell in "Dynamic torque control of a hydraulic quadruped robot," in IEEE International Conference in Robotics and Automation (ICRA), 2012, pp. 1889-1894 as well as in the article from J. Buchli, M. Kalakrishnan, M. Mistry, P. Pastor, and S. Schaal, "Compliant quadruped locomotion over rough terrain," in IEEE/RSJ International Conference on Intelligent Robots and Systems, 2009, but its application on exoskeletons has not yet been shown.

In other words, instead of directly measuring the interaction forces, the robot floating-base rigid body model and Inertial Measurement Sensors (so called IMUs) are used, together with a state estimator, which can be realized with a Kalman-Filter, estimating primarily the interaction force but possibly also other states, to drive the interaction force to null and make the robot really imperceptible to the user.

This involves the implication of two main control blocks. 1.) to measure the human limbs acceleration with an inertial sensor and to use this measurement as desired acceleration for the exoskeleton robot links and 2.) to estimate the interaction forces between the robot and the human by using an state estimator.

Control block 1) to be able to track the human acceleration, the robot controller concurrently employs two control modes a.) a model-based feedforward controller, based on the floating-base rigid body dynamics model of the robot, which predicts a priori the required robot joint torques needed to produce the desired acceleration; and b.) a feedback controller, which requires an additional IMU on the robot. With both human and robot IMUs, it is possible to close the feedback loop on the acceleration, where the human acceleration is set as desired value.

For Control block 2) a state estimator filter is used to observe the coupled system, dynamics, which is composed of the robot closely attached to the human, and to estimate the interaction forces. Then, an additional feedback loop is closed using the estimated force to try to make it converge to zero.

In an alternative embodiment to this approach, the same control block 1) is kept but for control block 2) instead of estimating the interaction forces with a state estimator they are measured directly with force sensors at the human-robot attachment points.

In a further different embodiment, the mode--based feedforward command in control block 1) is replaced using a different modeling approach, rather than floating based rigid body modeling, to calculate a priori the torques needed to perform the desired motion.

An application of the principles of the invention is shown with a torque-controlled leg that demonstrates the suitability of this control approach.

Further embodiments of the invention are laid down in the dependent claims.

The results have shown that there is a clear and significant improvement in the transparency capabilities when the acceleration-based controllers are applied. However, although the interaction force dynamics (time derivatives of fi) can converge to zero with this controller, it does not mean necessarily that also the interaction force $f_i$ will be null. It will depend on the initial conditions of the system.

Compared to the above mentioned Aguirre-Ollinger paper, the invention uses the human acceleration measurement as input for a feedforward controller; uses the exoskeleton floating base rigid body model to estimate the robot torques needed to produce the human acceleration; the feedback loop between the exoskeleton and the human acceleration is closed; and the interaction forces are estimated through the state observer in order to enhance the transparency behavior; we can guarantee stability properties.

Compared to the Kazerooni approach, robot acceleration is used as input for the inverse dynamics controller. Relevant differences with respect to the invention are that here, the human acceleration is used, measured with an inertial sensor, as input for the inverse dynamics controller; an exoskeleton floating base rigid body model is used, which encapsulates in a single mathematical model all the gait phases, to estimate the robot torques needed to produce the human acceleration; the feedback loop between the exoskeleton and the human acceleration is closed; and the interaction forces are estimated through the state observer in order to enhance the transparency behavior.

The Zannotti approach is substantially different from the invention, since the controllers according to the invention do not need a direct measurement of the interactions forces, but instead the invention uses a state observer to estimate them. As for the previous cases, further differences between the prior art approach and the invention include: the use of a full rigid body model of the exoskeleton to calculate a feedforward torque term, based on the human acceleration, which aims to follow the human motions; and the feedback loop between the exoskeleton and the human accelerations is closed.

The invention uses inertial sensors attached to the human to create desired accelerations to a floating-base inverse dynamics controller. This avoids the use of a force sensor to measure the interaction forces between the user and the robot. This simplifies the mechanical design of the robot, reducing sensor needs, manufacturing complexity and costs. Furthermore, this approach uses a model to predict the torques needed to follow the human motions; its performance tends to be superior to mere and pure feedback controllers, where an action is taken only when an error on the desired interaction force is presented. In other words, with the model-based control approach according to the invention the robot can react with less lag to human motions. In addition, it is possible to overcome fundamental limits of traditional control approaches, such as impedance control, on the capability of masking the dynamics (i.e. inertia) of the robot.

The method and device is configured to measure the human limbs acceleration and use this signal to drive a model-based controller. This method does not require a human model nor the measurement of the interaction force.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1    shows a schematic representation of a 1 DOF exoskeleton attached to a human;
Fig. 2    shows an open-loop block diagram of the 1 DOF model dynamics of the device representation of Fig. 1;
Fig. 3    shows a schematic representation of a physical robot-human attachment;
Fig. 4    shows a plot of an end-effector position tracking for the x-direction (above) and the feedforward torques (below) for the human position reference and the real motion positions of the robot;
Fig. 5    shows a control diagram of an embodiment of the invention as explained in connection to Fig. 1 to 4; and
Fig. 6    shows a general control diagram of an embodiment of the invention as explained in connection to Fig. 1 to 4.

DESCRIPTION OF PREFERRED EMBODIMENTS

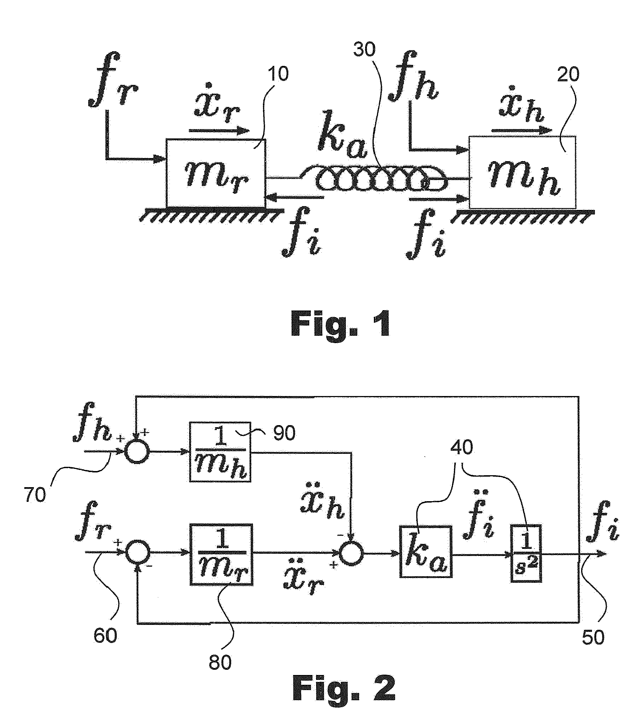

Fig. 1 shows a schematic representation of a 1 DOF exoskeleton or robot 10 attached to a human 20. A wearable robot 10 realized by the exoskeleton is always, somehow or other, connected to the wearer; here the human 20. Both the robot 10 and the human 20 are very complex systems on their own, usually with several degrees of freedom (DOFs). Thus, to better explain the human/robot interaction, Fig. 1 and Fig. 2 are related to a very simple and conceptual 1 DOF linear embodiment explaining the essence of the coupled system.

The scheme depicted in Fig. 1 considers both human 20 and robot 10 as simple inertias, $m_h$ and $m_r$, respectively, and the attachment 30 as elastic element. Beside a spring as elastic element, it is possible to have an attachment 30 as a non-rigid or soft element, or more generally any compliant element. Such compliant elements as attachment 30 can comprise a mix of springs as elastic elements and dampers. The force $f_h$ characterizes any force profile applied by the human 20 to its own body through its muscular system, while $f_r$ represents the forces exerted by the wearable robot 10. Given the relative motion between robot 10 and human 20, the attachment stiffness $k_a$ defines the dynamics of the interaction force $f_i$. The dynamics of the coupled system can be described through the three following equations:

$$\dot{f}_i = k_a(\dot{x}_r - \dot{x}_h) \qquad (1)$$

$$f_r - f_i = m_r\ddot{x}_r \qquad (2)$$

$$f_h + f_i = m_h\ddot{x}_h \qquad (3)$$

These equations can be combined to define the dynamics of the interaction force as following:

$$m_r\ddot{f}_i + k_a f_i = k_a(f_r - m_r\ddot{x}_h) \qquad (4)$$

The input variable in equation (4) is the robot force $f_r$ marked with reference 60. Since the overall goal of the invention is to make a wearable robot 10 transparent to the user 20, the dynamics of the interaction force $f_i$ with the reference 50 is such that it converges as quickly as possible to zero.

Fig. 2 shows an open-loop block diagram of the conceptual 1 DOF model dynamics. The human acceleration $\ddot{x}_h$ provided by the human force $f_h$ with reference 70 can be seen as a natural disturbance in the dynamics between the robot force $f_r$ and the interaction force $f_i$. As usual identical references in text or numerals relate to identical features, e.g. $k_a$ represents in Fig. 1 and Fig. 2 the spring constant in the simple model of an attachment 30. The human force 70 and the interaction force 50 are connected with the human dynamics model to derive human acceleration $\ddot{x}_h$.

There are different possibilities on how to control the robot/human interaction forces in order to make the wearable robot 10 transparent to the wearer (human 20). Usually either an impedance control or a feedback control loop on the interaction force 50 can be employed. In addition to these control approaches, by measuring the human acceleration both model-based feedforward control and acceleration feedback control can also be used to enhance the interaction force control. All the approaches mentioned here consider that the robot 10 is able to provide the desired force $f_r$ calculated by the controller. In other words, the robots 10 in the framework of the invention can be but are not limited to force-controlled robots and can be extended to other kind of robots too.

1) Impedance control: A common way of reducing the human-robot interaction forces is by actively reducing the apparent robot impedance at its contact points with the human. With feedback impedance control it is possible to set a desired dynamic behavior for the robot interaction ports. However, values for desired stiffness, damping, and inertia cannot be arbitrarily low. There are fundamental limitations on the stability of such controllers and on the amount of inertia it can mask (i.e. hide). E. Colgate and N. Hogan in "The interaction of robots with passive environments: Application to force feedback control", Advanced Robotics: 1989, pages 465-474, Springer, 1989, have shown that, given a uniform robot model, a feedback force controller can mask maximum half of the original mass. They also said this theoretical limitation is rather optimistic and that, in practice, limitations may be even more severe.

2) Model-based feedforward control: Equation 4, the term $m_r$ times $\ddot{x}_h$ in the right hand side depends both on the human acceleration and on the robot inertia. This term can be seen as a human disturbance input to the interaction force dynamics. No matter the feedback controller the robot designer chooses, to compensate for this human influence in the controller performance will always significantly improve the interaction force control performance. Also, by compensating for this term, the interaction force dynamics becomes human-independent, which is a very attractive feature that boosts the versatility of the controller. To compensate for this term, a feedforward force $f_{rff}$ as following is constantly provided:

$$f_{rff} = m_r * \ddot{x}_h \qquad (5)$$

Equation 5 inverts the robot forward dynamics 80 to produce a force command that compensates for the human acceleration influence in the loop. This means the calculation of $f_{rff}$ requires knowledge of the robot dynamic model (in this simple linear case only the mass $m_r$) and also the measurement of the human acceleration: $\ddot{x}_h$.

Given $f_{rff}$ perfectly cancels out the term $m_r$ in equation (4), the roots of the interaction force characteristic equation would be equal to s = +- SQR(-$k_a$/$m_r$), which means the system response would be purely oscillatory, the frequency of the oscillations being defined by the attachment stiffness and the robot inertia. Clearly, this is not a sufficient controller on its own since it is not able to set the force null. To do so, additionally, a feedback controller is used. Thus, the following sections will introduce two possible feedback controllers that are able to set a convergent dynamics for the interaction force dynamics.

3) Interaction force feedback control: to reach transparency, the most intuitive choice is to measure and control the quantity we want to regulate, i.e. the interaction force $f_i$. However, to measure interaction force with enough quality via instrumenting the human-robot attachment interface with force sensors is usually not easy, and often avoided. Yet, in case a measurement of $f_i$ is available, a feedback e.g. PD (proportional-derivative) controller can be added to the feedforward command as following:

$$f_r = f_{rff} + k_p(f_{id} - f_i) + kd(\dot{f}_{id} - \dot{f}_i) \qquad (6)$$

where $f_{id}$ is the desired interaction force, and $k_p$ and kd are the proportional and derivative gain respectively. To reach transparency, $f_{id}$ is set as zero, and the roots of the characteristic equation are be given by

$$s = \frac{-k_a k_d \pm \sqrt{(k_a k_d)^2 - 4m_r(1 + k_p)}}{2m_r},$$ the controller gain $k_p$ can be designed, for instance, to produce a critically-damped response, and $k_d$ to satisfy a desired settling time. In practice $k_d$ has to be carefully chosen, since it cannot be high because of sensor noise.

4) Acceleration feedback control is used: to avoid the additional complexity of adding a load cell at the attachment interface to measure the interaction forces, a closed feedback loop on the acceleration is provided instead of on the interaction force.

To do so, additionally to the human acceleration, used in the feedforward command $f_{rff}$, the robot acceleration has to be measured as well. Although it is possible to obtain the acceleration signal from double differentiation of the position signal, this in practice usually results in a poor measurement either because of sensor noise amplification or lag due to filtering. Thus, the use of a second IMU on the robot is appropriate to directly measure its acceleration. An IMU can be simply stick on the robot structure, making its mechanical integration generally much simpler than the one of a load cell.

By measuring both human and robot accelerations, an acceleration e.g. PI (proportional-integral) feedback controller can be designed. In this case, the human acceleration would be set as the desired acceleration that the robot would try to follow. By doing so, the following control action can be defined:

$$f_r = f_{rff} + k_p(\ddot{x}_h - \ddot{x}_r) + k_i(\dot{x}_h - \dot{x}_r) \qquad (7)$$

where $k_p$ and $k_i$ are the proportional and integral gains. With such control law, it is possible to obtain an interaction force dynamics similar to the one obtained by directly feeding back $f_i$ as described in the above section. That is, the roots of the characteristic equation in this case would be given by $s = \dfrac{-k_i \pm \sqrt{k_i^2 - 4(m_r + k_p)k_a}}{2(m_r + k_p)},$ where the gains

$k_p$ and $k_i$ can be designed to produce a desired convergent dynamics for the interaction force.

In Fig. 2 the open-loop (i.e. no controller present) dynamics is shown. The accelerations $\ddot{x}_h$ as well as $\ddot{x}_r$ are subtracted, the first from the latter, and handled within an attachment dynamics block 40, applying the spring constant to obtain the second derivative of the interaction force, which is doubled integrated to obtain the interaction force 50.

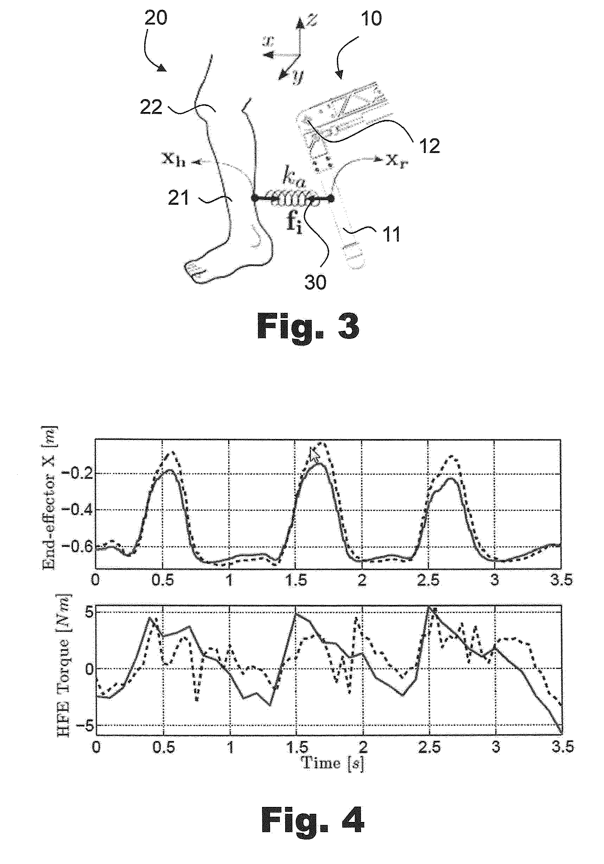

Fig. 3 shows a schematic of a possible robot/human attachment, wherein the same references are used as in Fig. 1 and Fig. 2 where a robot 10 with a robot lower leg 11, articulated at a joint 12 provides an exoskeleton to the user 20 with a lower leg 21 moving in relation to a knee joint 22. A cuff (not shown) attached to the lower leg 21 connects the attachment 30 to the robot lower leg 11.

The multi-DOF articulated case can be directly based on the simple linear 1-DOF conceptual model of Fig. 1 for a coupled robot/human system. Some main conclusions can be summarized as:

- impedance controllers have fundamental limitations in the inertia masking capabilities;
- a model-based feedforward command using the human acceleration as input is able to compensate for the human influence in the interaction force dynamics;
- acceleration feedback control is able to produce the same interaction force dynamics in closed-loop as when the interaction force itself is fed back, and its physical implementation is simpler.

These above-mentioned conclusions are valid for both a simplified 1-DOF case as shown in Fig. 1 as well as multi DOF cases as shown in Fig. 3.

For more complex system, such as articulated and multi-DOF robotic devices and human models, they can be well modelled as a rigid body system, since such robots are not fixed to their environment; they are best modeled with floating base dynamics. The forward floating base rigid body dynamics for the coupled robot/human system can be described as following:

$$\mathbf{M(q)\ddot{q}} + \mathbf{h(q,\dot{q})} = \mathbf{S}^T \tau + \mathbf{J}_c{}^T \lambda + \mathbf{J}_a{}^T \mathbf{f}_i \qquad (8)$$

where q is the vector of robot joint positions; M(q) is the robot floating base inertia matrix; $h(q, \dot{q})$, the robot floating base centripetal, Coriolis, and gravity forces vector; $S^T$ is the robot actuated joint selection matrix; $\tau$ the robot actuator torque command vector; $J_c{}^T$ is the Jacobian matrix of linearly independent constraints; $\lambda$ the vector of linearly independent constraint forces; $J_a{}^T$ is the Jacobian matrix of the attachment point $x_r$ (see Fig. 3); and $f_i$ the robot/human interaction force vector.

The constraints represent the locations on the robot that are in contact with the environment (e.g. the foot touching the floor) where no motion is observed with respect to the inertial frame. More details on the modelling and control of floating base robots can be found in "Inverse dynamics control of floating base systems using orthogonal decomposition" by M. Mistry, J Buchli and S. Schaal in IEEE, Int. Conference on Robotics and Automation (ICRA), pp 3406-3412.

The interaction force vector can be defined as a three dimensional vector $f_i = (f_{ix}; f_{iy}; f_{iz})^T$, which includes the components of the robot/human attachment force in the inertial frame and can be defined as:

$$\dot{\mathbf{f}}_i = k_a(\dot{\mathbf{x}}_r - \dot{\mathbf{x}}_h) \qquad (9)$$

where x = (x; y; z) is the position, in the inertial coordinate frame, of the attachment points for both robot and human, as depicted in Fig. 3.

As discussed previously, a feedforward model-based controller together with either interaction force or acceleration feedback is able to provide a second-order convergent dynamics for the interaction force. In the following explanation, the feedforward model-based controller will be extended to the multi-DOF articulated case. The feedback analysis is similar to the 1-DOF case, and it will not be included here.

1) Floating base rigid body inverse dynamics feedforward control: As discussed above, the feedforward command which tries to mimic the human acceleration requires the inversion of the robot dynamics. In the multi-DOF articulated case, the robot dynamics is given by the forward floating base rigid body dynamics described in Equation. 8. The inverse of this model provides us the joint torques $\tau_{ff}$ required to create a desired joint angular acceleration $\ddot{q}_a$, compensating also for the Coriolis and gravitational forces.

Since one goal of the invention is to follow the human motions with enhanced transparency, the desired robot angular accelerations in this case are set as the human angular accelerations. To convert the robot and human IMU acceleration readings to joint angular accelerations, a Jacobian matrix can be defined given the location of the IMUs. The most appropriate location of the IMUs on the robot and human links will depend on several factors, such as number of attachment points, robot kinematics, etc.

To overcome the intrinsic complexity related to floating base robots, such as under-actuation, dynamically changing contact states, and contact forces that may not be known, an orthogonal decomposition can be used to calculate the floating base inverse dynamics as explained in the above mentioned Mistry, Buchli and Schaal publication.

**EP 3 117 967 A1**

The robot 10 of Fig. 3 was used in an experimental test where the user 20 was using his arm as lower leg 21, where the movement of the underarm was used to simulate the leg movement for the robot to mimic human motions illustrating the potential of the inverse dynamics feedforward controller. The user 20 as a person, while holding an IMU in the hand, moved the elbow joint up and down. Then, we set the IMU accelerations as desired end-effector accelerations $\ddot{x}_{eed}$ for the robot 10 and mapped them into joint space desired accelerations $\ddot{q}_d$ by using the Jacobian $J_{leg}$ of the robot leg 11 and the dynamic relation $J_{leg}^{-1}(\ddot{x}_{eed} - \dot{J}_{leg}\dot{q})$. The desired accelerations $\ddot{q}_d$ were fed into the inverse dynamics algorithm, which calculated the joint torques required to mimic the human hand motion. Within the first experiment as proof of concept it demonstrates the function of the model-based feedforward controller with the human acceleration as input, to follow the human motions. During this preliminary experiment the hand of the user 20 was not attached to the robot leg 11, thus the interaction force is always zero. Also, there is no feedback controller active and the only input torques sent to the leg are from the feedforward inverse dynamics controller.

Fig. 4 shows both the end-effector position tracking in the x direction, and the respective torque tracking for the hip flexion-extension (HFE) joint of the robot leg. The upper plot of Fig. 4 shows that, even with no feedback loop and despite an overshoot, the human motion is qualitatively followed with practically no lag. The lower plot of Fig. 4 shows the initially non-perfect torque tracking as well as inaccuracies in the leg rigid body model and sensor/processing delays. To improve the performance, a second IMU at the robot link can be used to close a Cartesian acceleration loop since the second derivative of joint encoder measurements is too noisy and do not allow implementing this feedback controller.

Preferably, since the inverse dynamics controller is a marginally stable controller, an additional control element can be added to avoid drift and offsets due to modelling and measurement errors and sensors noise. The physical connection between the human and the exoskeleton or a nonzero gain for the position feedback controller can provide such stabilizing dynamics.

An important remark is that, to more easily implement this control approach in the exoskeleton, a joint torque controller beneficial. In this case, the higher the torque controller bandwidth, the more effective the controller. An accurate rigid body model of the exoskeleton is also important to provide a satisfactory human acceleration tracking. However, this control approach can also be deployed on a robot that is not torque-controlled, for instance using a reliable model of the actuation system and/or a system observer to estimate the torques.

The most appropriate location of the IMU on the human 20 depends on several factors. For instance, in case the exoskeleton kinematics are similar to the human kinematics, both human and robot joints. However, independently of where the IMU is placed on the human links, in case the human kinematics are known it is possible to define a Jacobian matrix which maps the acceleration from the IMU space to the human joint space.

The control approach to be chosen to control $f_i$ depends mainly on the available sensors. The best scenario is the one where the interaction force itself, the human acceleration, and the human forces measurements are available However, this scenario is not realistic in most of the cases. To measure the interaction force a single or multiple-axes load cell should be added to the interface between the robotic link and the user, increasing costs and design complexity. On the other hand, to obtain an estimation of the human forces, electromyographs (EMGs) should be employed. However, EMG sensors have to be calibrated to each individual user, and very often recalibration is also needed in daily basis, which is often impractical. Finally, the measurement of the human acceleration requires the use of inertial measurement units (IMUs). A benefit of using an IMU attached to the human is that it minimally impacts the robot design.

When the robot 10 moves with exactly the same acceleration of the human 20, the value of the interaction force 50 will depend on the relative position of both robot 10 and human 20, that is, on how much the attachment element 30 is compressed/extended at that time. In order to solve this issue, an estimation of the interaction force 50 can be used. For instance, a Kalman filter can be designed to estimate the interaction force magnitude based on the coupled system measurable states. This way, the estimated value $ef_i$ as a control input to help regulating the interaction force towards zero. In this case, a rough human locomotion model can also help improving the interaction force estimation.

To reach transparency with a wearable robot 10 means to guarantee zero interaction force between the robot 10 and the user 20. This is a very challenging task, since human actions can be very unpredictable and significantly vary among different subjects. Traditional control methods include impedance control and interaction force feedback control, however they have fundamental limitations and may considerably increase the robot design complexity. Thus, we presented a novel control method that is capable of enhancing the transparency performance and yet is easy to be integrated on the robot design. It consists of measuring the human acceleration though IMUs, and using this signal as input to a model-based feedforward controller.

This feedforward controller can preferably be used together with a feedback controller to ensure stability. The simplified stability analysis presented above shows that an acceleration feedback controller is able to produce the same system response as an interaction feedback controller. The simulation and experimental results according as shown in connection with the figures demonstrate the potential and efficacy of this control approach to mimic human motions.

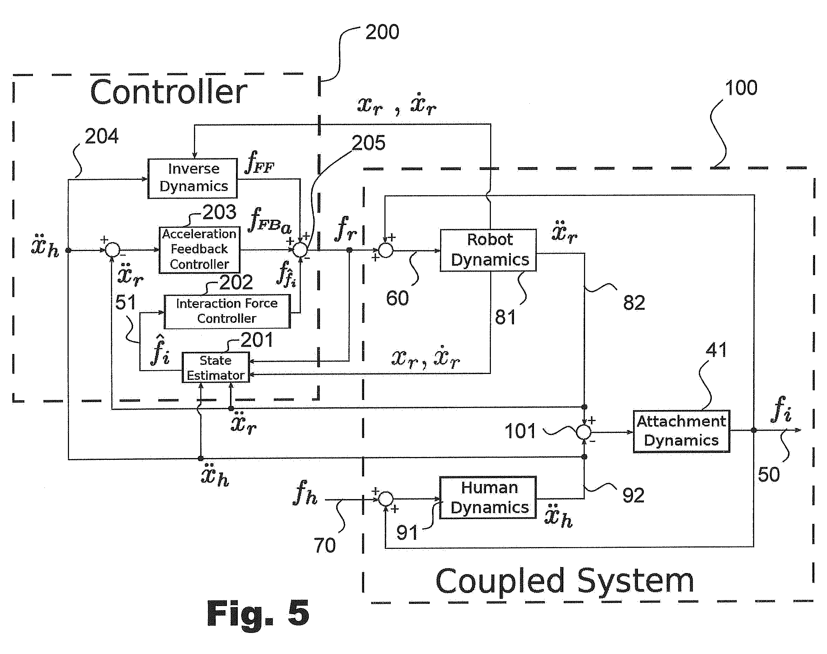

Fig. 5 shows a control diagram of an embodiment of the invention as explained in connection to Fig. 1 to 4. The overall system dynamics can be divided into a coupled system block 100 and a controller block 200. The robot dynamics block 81 comprises at least one sensor to obtain the acceleration of the robot $\ddot{x}_r$ directly. From this value is subtracted at the control point 101 the acceleration value of the human body part $\ddot{x}_h$ which was obtained through the human dynamics block 91 comprising at least one sensor to obtain the acceleration of the human body part $\ddot{x}_h$. The difference value is fed to the attachment dynamics controller 41 calculating the resulting interaction force 50, intended to be brought to a value of zero. The development of the resulting interaction force 50 over time is fed back to the robot input force 60 and the human input force 70, so that the coupled system block 100 is similar to Fig. 2 as such. Although the analysis of more or less complex robots and human user limbs in modules 81 and 91 is per se known, no prior art uses the acceleration values of the human and robot limb and especially not by use of IMUs.

This approach allows the direct use of the acceleration values within the control system 100 as shown in Fig. 5. State estimator 201 receives as input both acceleration values 82 and 92. State estimator 201 estimates the interaction forces as estimated interaction forces 51, which is then fed through an interaction force controller 202 to a feedback summing point 205. Then, an additional feedback loop is closed using the estimated force to try to make it converge to zero.

In alternative embodiment to this approach the state estimator 201 can be replaced, when they are measured directly with force sensors at human-robot attachment points. Then the inputs of acceleration 82 and 92 are replaced by measurements of the related forces through sensors.

The acceleration values 82 and 92 are also subtracted and fed to an acceleration feedback controller 203 providing an difference acceleration feedback to point 205 delivering the control signals to actuators within the robot 10 to provide the robot force $f_r$.

The state estimator 201 can also receive position and speed signals of the robot elements to improve its interaction force estimate. The position and speed signals of the robot are also inputs to the inverse dynamics module 204, which also receives the acceleration value of the human part 92.

The robot controller 200 concurrently employs two control modes which are a model-based feedforward controller, referenced as inverse dynamics controller 204, based on the floating-base rigid body dynamics model of the robot, which predicts a priori the required robot joint 12 torques needed to produce the desired acceleration; and an optional acceleration feedback controller 203, which requires an additional IMU on the robot. The inverse dynamics block 204 calculates, based on the robot model, the robot joint torques required to produce a certain desired acceleration (e.g. a human acceleration). However, because of model inaccuracies and torque tracking limitations, in practice the output torques calculated by inverse dynamics controller 204 will not produce exactly the desired input acceleration. In other words, the inverse dynamics controller 204 works in open-loop and do not have any information about the produced acceleration and how similar it is to the desired one (i.e. the human acceleration). Because of this, it is possible to optionally close an acceleration feedback loop to enforce the accelerations are equal. With both human and robot IMUs, it is possible to close the feedback loop on the acceleration, where the human acceleration 92 is set as desired value by subtracting the robot acceleration 82.

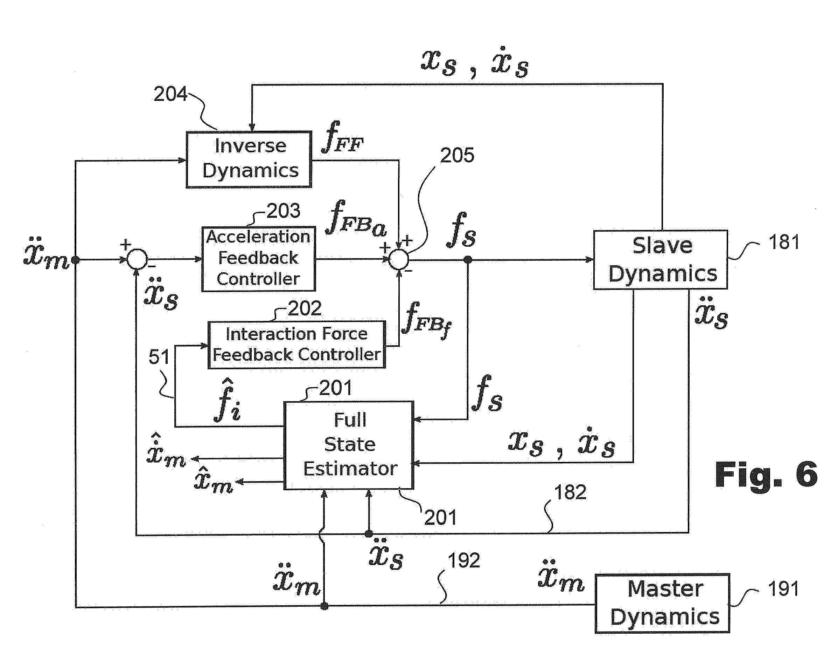

Fig. 6 shows a general control diagram of an embodiment of the invention as explained in connection to Fig. 1 to 4. The controller elements 201, 202, 203 and 204 as well as the point 205 are provided in an identical way beside the fact that the reference to "r" like robot was replaced by "s" like slave and the "h" for human was replaced by "m" as master.

In Fig. 5 as well as in Fig. 6 it is possible to add (not shown) as additional input for the interaction force feedback controller 202: a direct force value, the position, and velocity of the robot 10.

Although it is mandatory within the invention to directly obtain the acceleration values 82 and 92 through acceleration measuring sensors, it is not mandatory to feed these values to the state estimator 201. Said feed can, inter alia, be replaced by the above mentioned direct additional input to the interaction force feedback controller 202.

LIST OF REFERENCE SIGNS

| | | | |
|---|---|---|---|
| 10 | robot / exoskeleton | 80 | robot forward dynamics |
| 11 | robot lower leg | 81 | robot forward dynamics |
| 12 | robot joint | 82 | robot acceleration value |
| 20 | human | 90 | human forward dynamics |
| 21 | lower leg | 91 | human forward dynamics |
| 22 | knee joint | 92 | human acceleration value |
| 30 | attachment | 100 | coupled system |
| 40 | attachment dynamics module | 101 | attachment point |
| 41 | attachment dynamics | 181 | slave forward dynamics |
| 50 | interaction force | 182 | slave acceleration value |
| 51 | estimated interaction force | 191 | master forward dynamics |
| 60 | robot force | 192 | master acceleration value |

(continued)

| 70 | human force | 200 | controller block |
|---|---|---|---|
| 201 | state estimator | 204 | inverse dynamics |
| 202 | interaction force controller | 205 | force commands summing point |
| 203 | acceleration feedback controller | | |

**Claims**

1. A transparency control method (200) for robotic devices (10) where a master (20) controls a slave system (10) to minimize interaction forces through the method comprising:

   - providing a slave dynamics (81, 181) representing the slave system (10),
   - providing a feedback controller (203) and a feedforward controller (204) connected with the slave dynamics (81, 181),
   **characterized in that** a master acceleration value (92, 192) is provided as input for the feedforward controller (204), and **in that** the slave dynamics (81, 181) is configured to provide a slave acceleration value (82, 182) as input for the feedback controller (203), wherein the master and slave acceleration values are subtracted one from the other, to provide a position and velocity value as input for the feedforward controller (204), wherein the force output command of the feedback controller (203) and the feedforward controller (204) are summed up (205) to generate a force command for the slave dynamics (81, 181).

2. The control method according to claim 1, wherein both master and slave acceleration values, as well as the final slave force command and the slave position and velocity are provided for a state estimator module (201) providing an estimated interaction force value (51) as input for a force feedback controller (202), wherein the force output command of the force feedback controller (202) is added to the sum (205) of the force output command of the feedback controller (203) and the feedforward controller (204).

3. The control method according to claim 2, wherein the state estimator module (201) is provided initially with parameters relating to knowledge of the attachment dynamics (40, 41).

4. The control method according to any one of claims 1 to 3, wherein the robotic device (10) is part of the slave system and is connected through a physical attachment (30) to the master (20), wherein an attachment dynamics (40, 41) is configured to produce an interaction force (50).

5. The control method according to any one of claims 1 to 3, wherein the robotic device (10) as part of the slave system is a telerobotics device and the attachment (30) with the master (20) is a data connection, wherein an attachment dynamics (40, 41) is configured to produce an interaction force (50).

6. The control method according to any one of claims 1 to 3, wherein the robotic device (10) as part of the slave system is a virtual representation and the attachment (30) with the master (20) is a data connection, wherein optionally an emulation of an attachment dynamics (40, 41) is configured to produce an interaction force (50).

7. A transparency control device for robotic devices (10) where a master (20) controls a slave system (10) through a method according to any one of claims 1 to 6, comprising:

   - a slave dynamics (81, 181) representing the slave system (10),
   - a feedback controller (203) connected with the slave dynamics (81, 181), and
   - a feedforward controller (204) connected with the slave dynamics (81, 181), **characterized in that** the feedforward controller (204) is configured to receive a master acceleration value (92, 192) as input, and **in that** the feedback controller (203) is configured to receive a slave acceleration value (82, 182) as input from the slave dynamics (81, 181), wherein the control device is configured to subtract the master and slave acceleration values one from the other, to provide a position and velocity value as input for the feedforward controller (204), wherein the force output command of the feedback controller (203) and the feedforward controller (204) are summed up to generate a force command for the slave dynamics (81, 181).

8. The system according to claim 7, wherein the outputs of the slave dynamics (81, 181) as well as of the master dynamics (91, 191), especially both master and slave acceleration, as well as the final slave force command and the slave position and velocity are connected with a state estimator module (201) providing an estimated interaction force value (51) as input for a force feedback controller (202).

$f_r$    $\dot{x}_r$    10    30    $f_h$    $\dot{x}_h$    20

$k_a$

$m_r$      $m_h$

$f_i$      $f_i$

## Fig. 1

$f_h$   90

$\dfrac{1}{m_h}$

70

$\ddot{x}_h$    40

$f_r$    $\dfrac{1}{m_r}$    $\ddot{f}_i$   $f_i$

$k_a$   $\dfrac{1}{s^2}$

$\ddot{x}_r$

60    80      50

## Fig. 2

**Fig. 3**

**Fig. 4**

Fig. 5

Fig. 6

EP 3 117 967 A1

Europäisches
Patentamt

European
Patent Office

Office européen
des brevets

## EUROPEAN SEARCH REPORT

Application Number

EP 15 17 6833

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Minoru Takahata ET AL: "Teleoperation of Real-time Robotics", , 1 December 2005 (2005-12-01), XP055239619, Retrieved from the Internet: URL:https://www.nttdocomo.co.jp/english/binary/pdf/corporate/technology/rd/technical_journal/bn/vol7_3/vol7_3_044en.pdf [retrieved on 2016-01-08] * abstract * * figures 1,5 * * sections 1 and 2 * | 1-8 | INV. B25J9/16 B25J9/00 |
| A | VAN DIJK W ET AL: "Improving the transparency of a rehabilitation robot by exploiting the cyclic behaviour of walking", 2013 IEEE 13TH INTERNATIONAL CONFERENCE ON REHABILITATION ROBOTICS (ICORR), IEEE, 24 June 2013 (2013-06-24), pages 1-8, XP032518092, ISSN: 1945-7898, DOI: 10.1109/ICORR.2013.6650393 ISBN: 978-1-4673-6022-7 [retrieved on 2013-10-30] * abstract * * figures 1,3 * * sections I-III * | 1-8 | |
| | | | TECHNICAL FIELDS SEARCHED (IPC) |
| | | | B25J G05B A61B |
| A | US 2007/151389 A1 (PRISCO GIUSEPPE [US] ET AL) 5 July 2007 (2007-07-05) * abstract * * figures 1,4 * * paragraphs [0030] - [0078] * | 1-8 | |

-/--

The present search report has been drawn up for all claims

| Place of search | Date of completion of the search | Examiner |
|---|---|---|
| The Hague | 14 January 2016 | Hageman, Elodie |

EPO FORM 1503 03.82 (P04C01)

**EP 3 117 967 A1**

Europäisches
Patentamt

European
Patent Office

Office européen
des brevets

# EUROPEAN SEARCH REPORT

Application Number

EP 15 17 6833

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MCMAHAN W ET AL: "Haptic display of realistic tool contact via dynamically compensated control of a dedicated actuator",<br>INTELLIGENT ROBOTS AND SYSTEMS, 2009. IROS 2009. IEEE/RSJ INTERNATIONAL CONFERENCE ON, IEEE, PISCATAWAY, NJ, USA,<br>10 October 2009 (2009-10-10), pages 3170-3177, XP031580965,<br>ISBN: 978-1-4244-3803-7<br>* abstract *<br>* figure 2 *<br>* sections III-V * | 1-8 | |
| A | NATHANAËL JARRASSÉ ET AL: "Robotic exoskeletons: a perspective for the rehabilitation of arm coordination in stroke patients",<br>FRONTIERS IN HUMAN NEUROSCIENCE,<br>vol. 127, no. Pt 5,<br>1 December 2014 (2014-12-01), page 984, XP055238931,<br>DOI: 10.1093/brain/awh116<br>* abstract *<br>* figures 1,2,5 *<br>* sections 2-4 * | 1-8 | TECHNICAL FIELDS SEARCHED (IPC) |

The present search report has been drawn up for all claims

| Place of search | Date of completion of the search | Examiner |
|---|---|---|
| The Hague | 14 January 2016 | Hageman, Elodie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 117 967 A1**

## ANNEX TO THE EUROPEAN SEARCH REPORT
## ON EUROPEAN PATENT APPLICATION NO.

EP 15 17 6833

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2016

| Patent document cited in search report | Publication date | Patent family member(s) | Publication date |
|---|---|---|---|
| US 2007151389 A1 | 05-07-2007 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. H. KAZEROONI ; R. STEGER.** The Berkeley lower extremity exoskeleton. *ASME Journal of Dynamic Systems, Measurement and Control,* 2006, vol. 128, 14-25
- **H. KAWAMOTO ; Y. SANKAI.** Power assist method based on phase sequence and muscle force condition for HAL. *Advanced Robotics,* 2005, vol. 19 (7), 717-734
- **R. BLICKHAN.** The spring-mass model for running and hopping. *Journal of Biomechanics,* 1989, vol. 22 (11-12), 1217-1227
- **AGUIRRE-OLLINGER, G. ; COLGATE, J. E. ; PESHKIN, M. A. ; GOSWAMI, A.** Inertia Compensation Control of a One-Degree-of-Freedom Exoskeleton for Lower-Limb Assistance: Initial Experiments. *IEEE Transactions on Neural Systems and Rehabilitation Engineering,* 2012, vol. 20 (1), 68-7
- **KAZEROONI, H. ; RACINE, J. L. ; HUANG, L. ; STEGER, R.** On the control of the Berkeley Lower Extremity Exoskeleton (BLEEX). *IEEE International Conference in Robotics and Automation,* 2005
- **HUANG, L. ; STEGER, J. R. ; KAZEROONI, H.** Hybrid Control of the Berkeley Lower Extremity Exoskeleton (BLEEX). *ASME International Mechanical Engineering Congress and Exposition,* 2005
- **ZANOTTO, D. ; LENZI, T. ; STEGALL, P. ; AGRAWAL, S. K.** Improving Transparency of Powered Exoskeletons Using Force/Torque Sensors on the Supporting Cuffs. *IEEE International Conference on Rehabilitation Robotics,* 2013
- **T. BOAVENTURA ; C. SEMINI ; J. BUCHLI ; M. FRIGERIO ; M. FOCCHI ; D. G. CALDWELL.** Dynamic torque control of a hydraulic quadruped robot. *IEEE International Conference in Robotics and Automation,* 2012, 1889-1894
- **J. BUCHLI ; M. KALAKRISHNAN ; M. MISTRY ; P. PASTOR ; S. SCHAAL.** Compliant quadruped locomotion over rough terrain. *IEEE/RSJ International Conference on Intelligent Robots and Systems,* 2009
- The interaction of robots with passive environments: Application to force feedback control. **E. COLGATE ; N. HOGAN.** Advanced Robotics: 1989. 1989, 1989, 465-474
- **M. MISTRY ; J BUCHLI ; S. SCHAAL.** Inverse dynamics control of floating base systems using orthogonal decomposition. *IEEE, Int. Conference on Robotics and Automation,* 3406-3412